# EUROPEAN PATENT APPLICATION

(11) **EP 4 832 111 A1**
(43) Date of publication of application: **28.10.2026**
(21) Application number: 26174001.3
(22) Date of filing: 22.04.2026
(51) Int. Cl.: H01M 4/525, H01M 4/36, H01M 4/62, H01M 4/131, H01M 4/02

(54) **POSITIVE ELECTRODE AND RECHARGEABLE LITHIUM BATTERY INCLUDING POSITIVE ELECTRODE**

(30) Priority: 24.04.2025 KR 20250053791; 24.04.2025 KR 20250053724; 15.04.2026 KR 20260068348
(71) Applicant: SAMSUNG SDI CO., LTD., Yongin-si, Gyeonggi-do 17084 (KR)
(72) Inventor: KIM, Jinyoung, 17084 Yongin-si (KR); HWANG, Hoseong, 17084 Yongin-si (KR); KIM, Teayeop, 17084 Yongin-si (KR); JI, Seorin, 17084 Yongin-si (KR); LEE, Jongjin, 17084 Yongin-si (KR)
(74) Representative: Maiwald GmbH

(57) **Abstract**

A positive electrode for a rechargeable lithium battery may include a positive electrode current collector and a positive electrode active material layer on the positive electrode current collector. The positive electrode active material layer may include a positive electrode active material, which may include a first positive electrode active material having an average particle diameter D₅₀ from about 9 µm to about 25 µm and a second positive electrode active material having an average particle diameter D₅₀ from about 1 µm to about 8 µm and including a lithium transition metal composite oxide. The first positive electrode active material may include secondary particles in which a plurality of primary particles are agglomerated, comprising a lithium transition metal composite oxide, and a carbon coating layer on a surface of the secondary particles. A density of the positive electrode active material layer may be greater than or equal to about 3.7 g/cc.

## Description

### BACKGROUND

### 1. Field

The present disclosure relates to positive electrodes and rechargeable lithium batteries including the positive electrodes.

### 2. Description of the Related Art

A portable information device (such as a cell phone, a laptop, or a smart phone) has used a rechargeable lithium battery having high energy density and easy portability as a driving power source. Recently, research has been actively conducted to use a rechargeable lithium battery with high energy density as a driving power source for hybrid or electric vehicles or power storage source.

There is a problem of which electronic or ionic conductivity is reduced due to the pores within the electrode plates included in rechargeable lithium batteries. To solve this problem and to achieve a high plate density, a compression process is performed during manufacture of an electrode plate. However, there is still a problem of which cracks in the active material are induced during a compression process for electrode plates, which impairs electrochemical characteristics of the rechargeable lithium batteries.

### SUMMARY

Provided are a positive electrode and a rechargeable lithium battery including the same, which may reduce pores within a positive electrode and which may improve a density of the positive electrode while alleviating cracks in the active material, which occur during compression.

A positive electrode for a rechargeable lithium battery according to some embodiments of the present disclosure may include a positive electrode current collector and a positive electrode active material layer on the positive electrode current collector. The positive electrode active material layer may include a positive electrode active material. The positive electrode active material may include a first positive electrode active material having an average particle diameter D₅₀ from about 9 µm to about 25 µm and a second positive electrode active material having an average particle diameter D₅₀ from about 1 µm to about 8 µm. The first positive electrode active material may include secondary particles in which a plurality of primary particles are agglomerated, comprising a lithium transition metal composite oxide, and a carbon coating layer on a surface of the secondary particles. The second positive electrode active material may include a lithium transition metal composite oxide. A density of the positive electrode active material layer may be greater than or equal to about 3.7 g/cc.

In some embodiments, the density of the positive electrode active material layer may be from about 3.72 g/cc to about 4.00 g/cc.

In some embodiments, the positive electrode active material layer may include from about 20 wt% to about 95 wt% of the first positive electrode active material and from about 5 wt% to about 80 wt% of the second positive electrode active material based on a total of 100 wt% of the first positive electrode active material and the second positive electrode active material.

In some embodiments, the carbon coating layer of the first positive electrode active material may include graphene having a layered structure from 2 to 50 layers.

In some embodiments, in the carbon coating layer of the first positive electrode active material, the graphene may be derived from a plate-like carbon material.

In some embodiments, the plate-like carbon material may include graphene, graphite, or a combination thereof.

In some embodiments, an average size D₅₀ of the carbon material may be less than or equal to about 2.5 µm.

In some embodiments, an average size D₅₀ of the carbon material may be from about 50 nm to about 900 nm.

In some embodiments, a thickness of the carbon material may be from about 5 nm to about 100 nm.

In some embodiments, the carbon coating layer may be in a form of a continuous film or in a form of an island.

In some embodiments, the positive electrode active material layer may include the carbon coating layer in an amount from about 0.2 wt% to about 5.0 wt% based on 100 wt% of the first positive electrode active material.

In some embodiments, a thickness of the carbon coating layer may be from about 3 nm to about 500 nm.

In some embodiments, an average particle diameter D₅₀ of the primary particles constituting the secondary particles in the first positive electrode active material may be from about 10 nm to about 1 µm.

In some embodiments, the lithium transition metal composite oxide of the first positive electrode active material and the lithium transition metal composite oxide of the second positive electrode active material may be the same or may be different and may be each independently a lithium nickel-based composite oxide represented by:

Liₐ₁Niₓ₁M¹_{y1}M²_{z1}O_{2-b1}X_{b1}.

0.9≤a1≤1.2, 0.3≤x1<1, 0<y1≤0.7, 0≤z1≤0.7, 0.9≤x1+y1+z1≤1.1, and 0≤b1≤0.1. M¹ and M² may be each independently one or more elements of Al, B, Ba, Ca, Ce, Co, Cr, Cu, Fe, Mg, Mn, Mo, Nb, Si, Sn, Sr, Ti, V, Y, W, and Zr. X may be one or more elements of F, P, and S.

In some embodiments, the second positive electrode active material may include secondary particles in which a plurality of primary particles are agglomerated, single particles, or a combination thereof.

In some embodiments, the second positive electrode active material may include particles comprising the lithium transition metal composite oxide and a carbon coating layer on a surface of the particles of the second positive electrode active material.

In some embodiments, the carbon coating layer of the second positive electrode active material may include graphene having a layered structure from 2 to 50 layers.

**In** some embodiments, in the carbon coating layer of the second positive electrode active material, the graphene may be derived from a plate-like carbon material.

**In** some embodiments, the carbon coating layer of the first positive electrode active material or the carbon coating layer of the second positive electrode active material may include graphene having a layered structure from 2 to 50 layers and a carbon nanotube.

A rechargeable lithium battery according to some embodiments of the present disclosure may include the positive electrode as described above, a negative electrode, and an electrolyte.

The positive electrode according to some embodiments of the present disclosure may prevent cracks in the active material, which occur during compression, and a density of the electrode plate may be improved. Moreover, because the positive electrode includes a positive electrode active material having high particle strength and a high lubrication degree of particle surface, the pores within the electrode plate may be reduced, and the density of the electrode plate may be improved.

The rechargeable lithium battery according to some embodiments may improve energy density because it includes the positive electrode and may achieve a long cycle-life because the deterioration behavior is delayed.

### BRIEF DESCRIPTION OF THE DRAWINGS

FIGS. 1 to 4 are cross-sectional views each schematically showing a rechargeable lithium battery according to some embodiments of the present disclosure.
FIG. 5 is a scanning electron microscope image of the surface of a first positive electrode active material according to some embodiments of the present disclosure.
FIG. 6 is transmission electron microscope image of the cross-section of a first positive electrode active material according to some embodiments of the present disclosure.

### DETAILED DESCRIPTION

Hereinafter, specific embodiments will be described in detail so that those of ordinary skill in the art can easily implement them. However, this disclosure may be embodied in many different forms and is not construed as limited to the embodiments set forth herein.

The terminology used herein is used to describe some embodiments and is not intended to limit the present disclosure. The singular expression includes the plural expression unless the context clearly dictates otherwise.

"Combination thereof" means a mixture, a laminate, a composite, a copolymer, an alloy, a blend, a reaction product, and the like of the constituents.

Herein, it should be understood that terms such as "comprises," "includes," and "have" are intended to designate the presence of an embodied feature, number, step, element, or a combination thereof, but these words do not preclude the possibility of the presence or addition of one or more other features, number, step, element, or a combination thereof.

In the drawings, the thickness of layers, films, panels, or regions, are exaggerated for clarity and like reference numerals designate like elements throughout the specification. It will be understood that when an element such as a layer, film, region, or substrate is referred to as being "on" another element, the element can be directly on the other element or intervening elements may also be present. In contrast, when an element is referred to as being "directly on" another element, there are no intervening elements present.

"Layer" herein includes not only a geometry formed on the whole surface when viewed from a plan view, but also a geometry formed on a partial surface.

The average particle diameter may be measured by a method well known to those skilled in the art (for example, by a particle size analyzer or by a transmission electron microscope image or a scanning electron microscope image). Alternatively, it is possible to obtain an average particle diameter value by measuring using a dynamic light scattering method, performing data analysis, counting the number of particles for each particle size range, and performing calculations from resulting values and/or measurements. Unless otherwise defined, the average particle diameter may mean the diameter D₅₀ of particles having a cumulative volume of 50 volume% in the particle size distribution. In other words, when another definition is not otherwise provided, the average particle diameter means a diameter D₅₀ of particles having a cumulative volume of 50 volume% in the particle size distribution that is obtained by measuring the size (diameter or long axis length) of 20 particles at random in a scanning electron microscope image, each particle being assumed to have a spherical shape and the measured size being converted into an equivalent spherical diameter.

Herein, "or" is not to be construed as an exclusive meaning; for example, "A or B" is construed to include A, B, and A+B.

"Metal" is interpreted to include ordinary metals, transition metals, and metalloids (semi-metals).

### Positive Electrode

A positive electrode for a rechargeable lithium battery according to some embodiments may include a positive electrode current collector and a positive electrode active material layer on the positive electrode current collector. The positive electrode active material layer may include a positive electrode active material having a first positive electrode active material and a second positive electrode active material. The first positive electrode active material may include secondary particles in which a plurality of primary particles are agglomerated, comprising a lithium transition metal composite oxide, and a carbon coating layer on a surface of the secondary particles. Further, the first positive electrode active material may have an average particle diameter D₅₀ from about 9 µm to about 25 µm. The second positive electrode active material may include a lithium transition metal composite oxide, and the second positive electrode active material may have an average particle diameter D₅₀ from about 1 µm to about 8 µm. A density of the positive electrode active material layer may be greater than or equal to about 3.7 g/cc.

Electronic or ionic conductivity may be reduced due to the pores within a positive electrode, which may lead to disadvantages when creating a rechargeable lithium battery. To solve this problem and to achieve high electrode plate density, a compression process may be performed during the manufacture of the positive electrode. However, another problem arises, in that cracks may be induced in the positive electrode active material during the compression process.

The first positive electrode active material according to some embodiments includes secondary particles and a carbon coating layer on the surface of the secondary particles and, thus, has high particle strength and lubrication degree of particle surface. Accordingly, cracks in the active material that occur during the compression of the positive electrode may be alleviated, and the compression process may be performed at a greater pressure.

In addition, because the surface lubrication degree of the first positive electrode active material is high, the compression efficiency of the positive electrode may be increased by the sliding effect. In addition, because the compression process may be performed at a greater pressure, the porosity of the electrode plate may be reduced, and the mixture density of the electrode plate may be further improved.

### Positive Electrode Current Collector

The positive electrode current collector is not particularly limited as long as it is conductive and does not cause chemical changes in the positive electrode and the rechargeable lithium battery including the positive electrode. The current collector may include aluminum (Al), stainless steel (SUS), indium (In), magnesium (Mg), titanium (Ti), iron (Fe), cobalt (Co), nickel (Ni), zinc (Zn), germanium (Ge), lithium (Li), or a combination thereof and may include, for example, aluminum (Al).

The geometry of the positive electrode current collector may have various forms such as a plate, a thin body, a film, a sheet, a foil, a net, a porous body, a foam body, or a non-woven body. The positive electrode current collector may include microscopic irregularities on its surface, which may improve adhesive strength to the positive electrode active material.

A thickness of the positive electrode current collector may be from about 1 µm to about 20 µm, for example, from about 5 µm to about 15 µm or from about 7 µm to about 10 µm.

### Positive Electrode Active Material Layer

The positive electrode active material layer may be disposed on the positive electrode current collector and may include a first positive electrode active material having an average particle diameter D₅₀ of about 9 µm to about 25 µm and a second positive electrode active material having an average particle diameter D₅₀ of about 1 µm to about 8 µm. The first positive electrode active material may have a relatively large average particle size, and the second positive electrode active material may have a relatively small average particle size. Because the positive electrode active material layer includes both large and small particles, the positive electrode active material layer may maximize capacity and energy density and may implement long cycle-life characteristics for a rechargeable lithium battery.

According to some embodiments, the first positive electrode active material included in the positive electrode may include secondary particles in which a plurality of primary particles are agglomerated, comprising a lithium transition metal composite oxide, and a carbon coating layer located on the surface of the secondary particles.

Because the secondary particles are provided by closely cohering primary particles, the secondary particles may be spherical, ellipsoidal, polyhedral, or irregular, and the primary particles constituting the secondary particles may have a spherical geometry, ellipsoidal geometry, planar geometry, or a combination thereof.

An average particle diameter D₅₀ of the secondary particles may be from about 9 µm to about 25 µm, from about 9 µm to about 20 µm, from about 10 µm to about 18 µm, or from about 12 µm to about 16 µm. An average particle diameter D₅₀ of the primary particles constituting the secondary particles may be from about 10 nm to about 1 µm, for example, from about 10 nm to about 800 nm, from about 20 nm to about 500 nm, or from about 50 nm to about 200 nm. The average particle diameter D₅₀ of the secondary particles may be obtained by randomly selecting 20 particles from a scanning electron microscope image of the secondary particles, each particle being assumed to have a spherical shape and the measured size being converted into an equivalent spherical diameter, measuring their particle diameters (diameter, long diameter, or long axis length) to obtain a particle size distribution, and then taking the size of particles having a cumulative volume of 50 vol% from the particle size distribution as the average particle diameter. In addition, the average particle diameter D₅₀ of the primary particles constituting the secondary particles may be obtained by measuring the sizes of 30 primary particles in an electron microscope image of the surface or cross-section of the secondary particles and taking the diameter of the particles having a cumulative volume of 50 vol% from the particle size distribution as the average particle diameter.

A porosity of the secondary particles may be from about 2% to about 20%. The porosity may be, for example, an area ratio of a portion occupied by pores within a secondary particle measured using an image analysis program (such as Image J) in a scanning electron microscope image of a cross-section of a secondary particle.

The lithium transition metal composite oxide of the first positive electrode active material may include a lithium nickel-based oxide, a lithium cobalt-based oxide, a lithium manganese-based oxide, a lithium iron phosphate-based compound, a cobalt-free lithium nickel-manganese-based oxide, a lithium-manganese-rich composite oxide, or a combination thereof.

The lithium transition metal composite oxide of the first positive electrode active material may be a compound represented by any one of the following chemical formulas. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co₈X_{c}O_{2-α}D_{α} (0.90≤a≤1.8, 0≤b≤0.5, 0≤c≤0.5, 0<α<2); LiₐNi_{1-b-c}Mn₈X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCOC_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); or LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare-earth element, or a combination thereof; D is F, S, P, or a combination thereof; G is Al, Cr, Mn, Fe, Mg, La, Ce, Sr, V, or a combination thereof; and L¹ is Mn, Al, or a combination thereof.

The lithium transition metal composite oxide of the first positive electrode active material may include a lithium nickel-based composite oxide represented by Chemical Formula 1, a lithium cobalt-based oxide represented by Chemical Formula 2, a lithium iron phosphate-based compound represented by Chemical Formula 3, a cobalt-free lithium nickel-manganese-based oxide represented by Chemical Formula 4, or a combination thereof.

Chemical Formula 1 is as follows:

[Chemical Formula 1] Liₐ₁Niₓ₁M¹_{y1}M²_{z1}O_{2-b1}X_{b1}.

In Chemical Formula 1, 0.9≤a1≤1.2, 0.3≤x1<1, 0<y1≤0.7, 0≤z1≤0.7, 0.9≤x1+y1+z1≤1.1, and 0≤b1≤0.1. Further, M¹ and M² are each independently one or more elements of Al, B, Ba, Ca, Ce, Co, Cr, Cu, Fe, Mg, Mn, Mo, Nb, Si, Sn, Sr, Ti, V, Y, W, and Zr. Even further, X is one or more elements of F, P, and S.

Chemical Formula 2 is as follows:

[Chemical Formula 2] Liₐ₂Coₓ₂M³_{y2}O_{2-b2}X_{b2}.

In Chemical Formula 2, 0.9≤a2≤1.8, 0.7≤x2≤1, 0≤y2≤0.3, 0.9≤x2+y2≤1.1, and 0≤b2≤0.1. Further, M³ is one or more elements of Al, B, Ba, Ca, Ce, Cr, Cu, Fe, Mg, Mn, Mo, Ni, Se, Si, Sn, Sr, Ti, V, W, Y, Zn, and Zr. Even further, X is one or more elements of F, P, and S.

Chemical Formula 3 is as follows:

[Chemical Formula 3] Liₐ₃Feₓ₃M⁴_{y3}PO_{4-b3}X_{b3}.

In Chemical Formula 3, 0.9≤a3≤1.8, 0.6≤x3≤1, 0≤y3≤0.4, and 0≤b3≤0.1. Further, M⁴ is one or more elements of Al, B, Ba, Ca, Ce, Co, Cr, Cu, Mg, Mn, Mo, Ni, Se, Si, Sn, Sr, Ti, V, W, Y, Zn, and Zr. Even further, X is one or more elements of F, P, and S.

Chemical Formula 4 is as follows:

[Chemical Formula 4] Liₐ₄Niₓ₄Mn_{y4}M⁵_{z4}O_{2-b4}X₈₄.

In Chemical Formula 4, 0.9≤a4≤1.8, 0.8≤x4<1, 0<y4≤0.2, 0≤z4≤0.2, 0.9≤x4+y4+z4≤1.1, and 0≤b4≤0.1. Further, M⁵ is one or more elements of Al, B, Ba, Ca, Ce, Cr, Fe, Mg, Mo, Nb, Si, Sn, Sr, Ti, V, W, Y, and Zr. Even further, X is one or more elements of F, P, and S.

The lithium transition metal composite oxide of the first positive electrode active material may include a lithium nickel-based composite oxide represented by Chemical Formula 1. A rechargeable lithium battery with high capacity and high energy density may be implemented. The lithium transition metal composite oxide of the first positive electrode active material may include a compound represented Chemical Formula 5 or Chemical Formula 6.

Chemical Formula 5 is as follows:

[Chemical Formula 5] Liₐ₅Niₓ₅Co_{y5}M⁶_{z5}O_{2-b5}X_{b5}.

In Chemical Formula 5, 0.9≤a5≤1.2, 0.8≤x5<1, 0<y5≤0.2, 0≤z5≤0.2, 0.9≤x5+y5+z5≤1.1, and 0≤b5≤0.1. Further, M⁶ is one or more elements of Al, B, Ba, Ca, Ce, Cr, Cu, Fe, Mg, Mn, Mo, Nb, Si, Sn, Sr, Ti, V, W, Y, Zn, and Zr. Even further, X is one or more elements of F, P, and S.

In Chemical Formula 5, 0.9≤x5≤0.99, 0.01≤y5≤0.1, and 0≤z5≤0.1.

Chemical Formula 6 is as follows:

[Chemical Formula 6] Liₐ₆Niₓ₆Co_{y6}M⁷_{z6}M⁸_{w6}O_{2-b6}X_{b6}.

In Chemical Formula 6, 0.9≤a6≤1.2, 0.8≤x6≤0.98, 0.01≤y6≤0.19, 0.01≤z6≤0.19, 0≤w6≤0.19, 0.9≤x6+y6+z6+w6≤1.1, and 0≤b6≤0.1. Further, M⁷ is one or more elements of Al, Mn, or a combination thereof; M⁸ is one or more elements of B, Ba, Ca, Ce, Cr, Cu, Fe, Mg, Mo, Nb, Si, Sn, Sr, Ti, V, W, Y, Zn, and Zr; and M⁷ and M⁸ are different from each other. Even further, X is one or more elements of F, P, and S.

In Chemical Formula 6, 0.9≤x6≤0.98, 0.01≤y6≤0.09, 0.01≤z6≤0.09, and 0≤w6≤0.09.

**In** the lithium transition metal composite oxide of the first positive electrode active material, nickel may be included in an amount of greater than or equal to about 80 mol%, for example, greater than or equal to about 85 mol%, greater than or equal to about 90 mol%, greater than or equal to about 91 mol%, or greater than or equal to about 94 mol%, and less than or equal to about 99 mol% based on 100 mol% of a total metal excluding lithium. The first positive electrode active material may be a high-nickel positive electrode active material. Because high-nickel positive electrode active material may achieve high capacity, high capacity and high density in rechargeable lithium batteries may be achieved.

The carbon coating layer may be located on the surface of the secondary particle and may improve a particle strength of the first positive electrode active material and a lubrication degree of a particle surface of the first positive electrode active material. The carbon coating layer may include graphene in a layered structure from 2 to 50 layers. The number of layers of the graphene was determined by observing the cross-section of the carbon coating layer using High-Resolution Transmission Electron Microscopy (HR-TEM) and counting the number of visible lattice fringes.

For a positive electrode active material including a lithium nickel-based composite oxide, a design has been proposed to maximize capacity and energy density and to implement long cycle-life characteristics by mixing large and small particles. However, the positive electrode including the large and small particles may experience problems such as cracks forming in large particles of the positive electrode or damage to the surface during the compression process of the positive electrode. Accordingly, as the battery is repeatedly charged and discharged, deterioration of the capacity of the battery may accelerate, which may lead to reduced cycle-life characteristics.

The first positive electrode active material (i.e., which includes large particles) of the positive electrode may have a high particle strength and a high lubrication degree of the particle surface because the first positive electrode active material includes a carbon coating layer on a surface of the core particles having a form of secondary particles. Accordingly, cracks in the large particles that occur during the compression of the positive electrode may be alleviated, and the compression process may be performed at a greater pressure. In addition, the positive electrode including the large and small particles may reduce the pores of the electrode plate and may further improve the density of the positive electrode active material layer.

In addition, through the carbon coating layer, even when using a small amount of binder and conductive material during the manufacture of the positive electrode, adhesive strength and conductivity with the electrode plate can be achieved. As the amount of the binder or conductive material used in the manufacture of the positive electrode decreases, the amount of the positive electrode active material may increase, so that the rechargeable lithium battery can exhibit high-capacity and high-energy-density characteristics.

Meanwhile, technologies have been proposed to coat the surface of particles with amorphous carbon and to utilize them as positive electrode active materials, but uniform coating is difficult and there are limitations in increasing a particle strength and the lubrication degree of particle surface of the active material. According to some embodiments, because the first positive electrode active material included in the positive electrode includes a carbon coating layer including crystalline carbon provided in a two-dimensional plane, and because the carbon coating layer is provided in a uniform film geometry having a thickness of up to several tens of nanometers, a greater mixture density of the electrode plate can be realized compared to when particles of the positive electrode active material are coated with amorphous carbon. Accordingly, an electronic conductivity and an ionic conductivity of the positive electrode may be improved, the energy density may be increased while the resistance is decreased, and better electrochemical performance may be realized.

The layered structure from 2 to 50 layers may be expressed as a layered structure of 2 to 50 atomic layers. The carbon coating layer may include graphene having a layered structure of 2 to 48 layers, 5 to 45 layers, 7 to 40 layers, or 10 to 35 layers. The number of layers of the layered structure can be measured from high-resolution transmission electron microscopy (HR-TEM) images of the first positive electrode active material particles.

The interlayer spacing d₀₀₂ of the layered structure may be from about 0.320 nm to about 0.350 nm, for example, from about 0.325 nm to about 0.348 nm, from about 0.328 nm to about 0.345 nm, or from about 0.330 nm to about 0.342 nm. When the interlayer spacing d₀₀₂ of the layered structure satisfies the above ranges, the particle strength and particle surface lubrication degree of the first positive electrode active material may be further improved, and the density of the positive electrode active material layer may be maximized. The interlayer spacing d₀₀₂ may be measured by a method known to those skilled in the art. The interlayer spacing d₀₀₂ of the layered structure may be measured by obtaining the peak of the 002 plane through X-ray diffraction (XRD) of the carbon coating layer and then analyzing the peak of the 002 plane. The 002 plane represents the range of 25.0° < 2θ < 27.0°, where 20 represents the diffraction angle. XRD measurement data may be subjected to noise removal (baseline setting), using a conventional program equipped in the XRD device as a data processing and analysis program. Additionally, the peak profile of the peak on the 002 plane may be fitted with a conventional fitting function such as a Gaussian function or a Lorenz function. In addition, the interlayer spacing d₀₀₂ of the layered structure may be expressed by a method of measuring the interlayer spacing d₀₀₂ of a plate-like carbon material, and the interlayer spacing d₀₀₂ of the carbon material may be measured through XRD analysis of the carbon material. The number of layers in the layered structure, the interlayer spacing (d₀₀₂), and the thickness of the coating layer are determined as average values obtained from measurements at multiple randomly selected locations on the cross-section of the core particles via HR-TEM. It is noted that the correlation between these parameters follows the physical characteristics of the graphene coating, where the total thickness of the coating layer is the product of the number of layers and the average interlayer spacing.

In the carbon coating layer of the first positive electrode active material, the graphene may be derived from a plate-like carbon material. The carbon material may be expressed as a sheet-type carbon material or a 2D carbon material and may include, for example, crystalline carbon. The carbon material may include graphene, graphite, or a combination thereof and may be, for example, particulate graphite. The graphene of the carbon coating layer may be derived from particulate graphite. The carbon coating layer may have a layered structure exhibiting a dense crystal structure, may include crystalline carbon provided in a two-dimensional plane on the surface of the secondary particles, and may have a thin and uniform thickness. Accordingly, a particle strength and a lubrication degree of particle surface of the first positive electrode active material may be improved, and a density of the positive electrode active material layer may be maximized. In addition, an electronic conductivity of the positive electrode and an interfacial resistance may be improved, an intercalation and a deintercalation of lithium ions may be more effective, and an ionic conductivity may be improved because the lithium ions diffuse along the layered structure.

The average size D₅₀ of the carbon material may be less than or equal to about 2.5 µm, for example, less than or equal to about 1.5 µm, less than or equal to about 1.0 µm, less than 1 µm, or less than or equal to about 0.5 µm, may be greater than or equal to about 0.01 µm, greater than or equal to about 0.05 µm, or greater than or equal to about 0.08 µm and may be from about 10 nm to about 1,000 nm, from about 30 nm to about 950 nm, or from about 50 nm to about 900 nm. When an average size of the carbon material satisfies the above ranges, a carbon coating layer may be provided with a uniform thickness on the surface of the secondary particles, and the particle strength and the lubrication degree of the particle surface of the first positive electrode active material, and density of the positive electrode active material layer may be maximized. The average size D₅₀ of the carbon material may be measured through a particle size analyzer, and may refer to a size of particles having a cumulative volume of 50 vol% in the particle size distribution. Also, the particle size may mean a length of the longest axis in a plane direction perpendicular to a thickness direction in the planar geometry. For the purpose of calculating the cumulative volume and D₅₀, even if a particle has a planar shape, its size is represented as an equivalent spherical diameter. In the case of planar geometry, this diameter is determined based on the characteristic dimension (e.g., the longest axis in the plane direction) to ensure a standardized and reproducible comparison of particle size distributions.

The thickness of the carbon material may be less than or equal to about 1.0 µm, less than about 1 µm, less than or equal to about 0.9 µm, less than or equal to about 0.7 µm, or less than or equal to about 0.5 µm; may be greater than or equal to about 0.01 µm, greater than or equal to about 0.05 µm, or greater than or equal to about 0.08 µm; and/or may be from about 5 nm to about 500 nm, from about 5 nm to about 300 nm, or from about 5 nm to about 100 nm. When the thickness of the carbon material satisfies the above ranges, a carbon coating layer may be provided with a uniform thickness on the surface of the secondary particles, and the particle strength and the lubrication degree of the particle surface of the first positive electrode active material, and the density of the positive electrode active material layer may be maximized. The thickness of the carbon material may be measured through SEM or TEM images of the carbon material particles.

The carbon material may have a ratio I_{D}/I_{G} of a peak intensity I_{D} around 1350 cm⁻¹ to a peak intensity I_{G} around 1580 cm⁻¹ in a Raman spectrum from about 0.15 to about 0.50, for example, from about 0.15 to about 0.45, from about 0.18 to about 0.45, or from about 0.20 to about 0.40. When the I_{D}/I_{G} value of the carbon material satisfies the above ranges, a carbon coating layer may be provided with a uniform thickness on the surface of the secondary particles, and the particle strength and the lubrication degree of the particle surface of the first positive electrode active material, and the density of the positive electrode active material layer may be maximized. For instance, the Raman spectra may be measured using a Raman spectrometer (e.g., ICRM7000 (Renishaw), etc.) under the conditions of a laser wavelength of about 632 nm and a lowest Raman shift of about 946 cm⁻¹. The peak intensity ratios described herein are obtained from peaks observed in the Raman shift range starting from the lowest Raman shift of about 946 cm⁻¹. These measurement conditions are standard in the art, and it would be within the ability of a person skilled in the art to adjust these parameters, such as laser power or exposure time, while maintaining the relative trend of the peak intensity ratios, to ensure reproducibility.

The carbon coating layer of the first positive electrode active material may comprise carbon nanotubes. The carbon nanotubes may include at least one selected from single-walled carbon nanotubes (SWCNT), thin-walled carbon nanotubes (TWCNT), and multi-walled carbon nanotubes (MWCNT).

An average length of the carbon nanotubes may be from about 0.1 µm to about 35 µm, for example, from about 0.3 µm to about 30 µm, from about 0.5 µm to about 25 µm, from about 1 µm to about 20 µm, from about 3 µm to about 18 µm, or from about 5 µm to about 15 µm. When the average length of the carbon nanotubes satisfies the above ranges, the carbon coating layer may be provided with a uniform thickness on the surface of the secondary particles, and a density and a conductivity of the first positive electrode active material may be maximized. A length of a carbon nanotube may refer to a length of a major axis passing through a center of a carbon nanotube unit. The average length of the carbon nanotubes may be obtained by randomly selecting about 20 carbon nanotubes from SEM image, measuring the lengths of the 20 carbon nanotubes, and calculating an average value for the 20 carbon nanotubes.

An average diameter of the carbon nanotubes may be from about 1 nm to about 50 nm, for example, from about 1 nm to about 40 nm, from about 1.5 nm to about 30 nm, from about 1.8 nm to about 20 nm, or from about 2 nm to about 15 nm. The diameter of the carbon nanotubes may refer to the length of a minor axis passing through the center of a carbon nanotubes unit and being perpendicular to the major axis. The average diameter of the carbon nanotubes may be obtained by randomly selecting about 20 carbon nanotubes from TEM image, measuring the diameters of the 20 carbon nanotubes, and calculating an average value of the 20 carbon nanotubes.

The carbon coating layer of the first positive electrode active material may include graphene and carbon nanotubes. The adhesive strength and conductivity of the positive electrode active material may be further improved, and the rechargeable lithium battery including the positive electrode active material may exhibit high-capacity and high-energy-density characteristics.

When the carbon coating layer of the first positive electrode active material includes graphene and carbon nanotubes, the graphene of the carbon coating layer may be included in an amount from about 0.02 wt% to about 3.0 wt%, and the carbon nanotubes of the carbon coating layer may be included in an amount from about 0.02 wt% to about 3.0 wt%, based on a total of 100 wt% of the first positive electrode active material. The graphene of the carbon coating layer may be included in an amount from about 0.03 wt% to about 2.5 wt% and the carbon nanotubes may be included in an amount from about 0.03 wt% to about 2.5 wt%, based on a total of 100 wt% of the first positive electrode active material. The graphene may be included in an amount from about 0.05 wt% to about 2.0 wt% and the carbon nanotubes may be included in an amount from about 0.05 wt% to about 2.0 wt%, based on a total of 100 wt% of the first positive electrode active material. The graphene may be included in an amount from about 0.05 wt% to about 0.5 wt% and the carbon nanotubes may be included in an amount from about 0.05 wt% to about 0.5 wt%, based on a total of 100 wt% of the first positive electrode active material. When the amount of the graphene of carbon coating layer or the amount of the carbon nanotubes of carbon coating layer satisfies the above range, the adhesive strength and conductivity of the positive electrode active material may be maximized.

The carbon coating layer may be included in an amount from about 0.05 wt% to about 5.0 wt%, for example, from about 0.2 wt% to about 5.0 wt%, from about 0.5 wt% to about 4.5 wt%, from about 0.8 wt% to about 4.0 wt%, or from about 0.8 wt% to about 3.0 wt% based on a total of 100 wt% of the first positive electrode active material layer. When the amount of the carbon coating layer satisfies the above ranges, the particle strength and the lubrication degree of the particle surface of the first positive electrode active material may be further improved, and the density of the positive electrode active material layer may be maximized.

As another example, the carbon coating layer may be included in an amount from about 0.2 wt% to about 5.0 wt%, from about 0.2 wt% to about 3.0 wt%, from about 0.2 wt% to about 2.0 wt%, from about 0.2 wt% to about 1.0 wt%, or from about 0.2 wt% to about 0.8 wt% based on 100 wt% of the total weight of the first positive electrode active material layer. Even if the amount of the carbon coating layer is an extremely small amount of less than about 1 wt%, the carbon coating layer may be coated on the surface of the secondary particles well, thereby increasing the electrical conductivity of the positive electrode active material, increasing the lubrication degree of the particle surface of the first positive electrode active material, and increasing the density of the positive electrode. If the carbon coating layer includes graphene with a layered structure from 2 to 50 layers, an amount of graphene may be the same as an amount of the carbon coating layer.

The carbon coating layer may be in a form of a continuous film or in a form of an island. In some embodiments, the carbon coating layer may be in the form of a film that continuously surrounds the surface of the secondary particle. In some embodiments, the carbon coating layer may be in the form of a shell that surrounds the entire surface of the secondary particle. When the carbon coating layer is provided to completely cover the surface of the secondary particles, the particle strength and the lubrication degree of the particle surface of the first positive electrode active material may be further improved. In addition, the first positive electrode active material may have improved structural stability without increasing resistance or decreasing capacity, and the density of the positive electrode active material layer including the positive electrode active material may be improved.

The carbon coating layer may have a ratio I_{D}/I_{G} of the peak intensity I_{D} around 1350 cm⁻¹ to the peak intensity I_{G} around 1580 cm⁻¹ in a Raman spectrum of about 0.15 to about 0.50, for example, about 0.15 to about 0.45, about 0.18 to about 0.45, or about 0.20 to about 0.40. When the I_{D}/I_{G} value of the carbon coating layer satisfies the above ranges, the particle strength and surface lubrication degree of the first positive electrode active material may be further improved, and the density of the positive electrode active material layer may be maximized. When the carbon coating layer includes graphene with a layered structure from 2 to 50 layers, an I_{D}/I_{G} of the graphene may be the same as an I_{D}/I_{G} of the carbon coating layer.

A thickness of the carbon coating layer may be from about 3 nm to about 500 nm, for example, from about 3 nm to about 400 nm, from about 2 nm to about 300 nm, from about 3 nm to about 200 nm, from about 3 nm to about 100 nm, from about 4 nm to about 50 nm, from about 5 nm to about 30 nm, from about 5 nm to about 20 nm, or from about 5 nm to about 15 nm. When the thickness of the carbon coating layer satisfies the above ranges, the structural stability of the first positive electrode active material may be improved and the density of the positive electrode active material layer may be improved without the resistance increasing or the capacity decreasing due to the carbon coating layer. The thickness of the carbon coating layer may be measured by a transmission electron microscope on the cross-section of the positive electrode active material particles cut by FIB (focused ion beam). However, the present disclosure is not limited thereto, and the thickness of the carbon coating layer may be measured through, for example, SEM, TOF-SIMS, XPS, or EDS analysis and may be measured through a TEM-EDS line profile.

A carbon coating layer may be thin, on the order of several to tens of nanometers in thickness, yet uniform in thickness. A difference between the highest and lowest thicknesses of the carbon coating layer in one positive electrode active material secondary particle may be less than or equal to about 30 nm, for example, less than or equal to about 25 nm, less than or equal to about 20 nm, or less than or equal to about 15 nm, and greater than or equal to about 0.30 nm, greater than or equal to about 0.33 nm, greater than or equal to about 0.35 nm, or greater than or equal to about 0.40 nm. The difference between the highest and lowest thicknesses of the carbon coating layer satisfying the above ranges means that a carbon coating layer of uniform thickness is well provided in a film form on the surface of the first positive electrode active material particle. Accordingly, the particle strength and the lubrication degree of particle surface of the first positive electrode active material may be further improved, and the density of the positive electrode active material layer may be maximized. The highest and lowest thicknesses of the carbon coating layer may be measured based on an electron microscope image of the first positive electrode active material. In an electron microscope image of a cross-section of the first positive electrode active material particle, the thickness of the thickest part of the cross-section of the carbon coating layer may be defined as the highest thickness of the carbon coating layer, and the thickness of the thinnest part may be defined as the lowest thickness of the carbon coating layer. A thickness of the carbon coating layer may be a vertical distance from the outer surface of the secondary particle to the outer surface of the carbon coating layer. A scanning electron microscope or a transmission electron microscope may be used as an electron microscope.

The average particle diameter D₅₀ of the first positive electrode active material may be about 6 µm to about 25 µm and may be, for example, from about 9 µm to about 20 µm, from about 10 µm to about 18 µm, or from about 12 µm to about 16 µm. When the average particle diameter D₅₀ of the first positive electrode active material satisfies the above ranges, the capacity, the energy density, and the long cycle-life characteristics may be maximized. The average particle diameter D₅₀ of the first positive electrode active material may be obtained by randomly selecting 20 particles from a scanning electron microscope image of the first positive electrode active material, each particle being assumed to have a spherical shape and the measured size being converted into an equivalent spherical diameter, measuring the particle diameters (i.e., a diameter, a long diameter, or a long axis length) of the 20 particles to obtain a particle size distribution, and then taking the size of particles having a cumulative volume of 50 vol% from the particle size distribution as the average particle diameter.

The second positive electrode active material included in the positive electrode according to some embodiments includes a lithium transition metal composite oxide and has an average particle diameter D₅₀ from about 1 µm to about 8 µm. Because the lithium transition metal composite oxide of the second positive electrode active material may be the same as the lithium transition metal composite oxide of the first positive electrode active material, detailed descriptions thereof are omitted. The type of lithium transition metal composite oxide of the second positive electrode active material may be the same as or different from the type of lithium transition metal composite oxide of the first positive electrode active material.

The second positive electrode active material may comprise secondary particles in which a plurality of primary particles are agglomerated, single particles, or a combination thereof. Because the secondary particles is as described above, detailed descriptions thereof are omitted. The secondary particle may refer to a particle in which more than 10 primary particles are agglomerated to form a distinct particle shape. For example, the secondary particle may be an agglomerate of 50 to several hundred primary particles. Such a structure typically arises when a layered nickel-based positive electrode active material is synthesized via coprecipitation. In contrast, a single particle, as described below, contains no internal grain boundaries and constitutes a single body. Whether a particle is secondary or single can be readily determined through SEM or TEM images of the surface or cross-section of the positive electrode active material.

When the second positive electrode active material is in a form of single particles, the second positive electrode active material may have various geometries such as a polyhedral geometry, a spherical geometry, an ellipsoidal geometry, a planar geometry, a rod geometry, or an irregular geometry. Each single particle exists alone without a grain boundary within the particle, is composed of one particle and may be a monolith structure, a one body structure, or a non-agglomerated particle, in which particles are not agglomerated with each other but exist as an independent phase in terms of morphology and may be expressed as a single crystal.

The average particle diameter D₅₀ of the second positive electrode active material may be from about 1 µm to about 8 µm and may be, for example, from about 1 µm to about 7.5 µm, from about 1 µm to about 7 µm, or from about 1 µm to about 6 µm. When the average particle diameter D₅₀ of the second positive electrode active material satisfies the above ranges, the capacity, the energy density, and the long cycle-life characteristics may be maximized. The average particle diameter D₅₀ of the second positive electrode active material may be obtained by randomly selecting 20 particles from a scanning electron microscope image of the positive electrode active material, each particle being assumed to have a spherical shape and the measured size being converted into an equivalent spherical diameter, measuring the particle diameters (i.e., a diameter, a long diameter, or a long axis length) of the particles of the positive electrode active material to obtain a particle size distribution, and then taking the size of particles having a cumulative volume of 50 vol% from the particle size distribution as the average particle diameter.

The second positive electrode active material may include particles including a lithium transition metal composite oxide and a carbon coating layer on the surface of the particles. The particle strength and the lubrication degree of the particle surface of the second positive electrode active material may be improved. The carbon coating layer of the second positive electrode active material may include graphene having a layered structure from 2 to 50 layers, and the graphene may be derived from a plate-like carbon material. Because the details of carbon coating layer, graphene, and plate-like carbon material are as described above, detailed descriptions thereof will be omitted.

The carbon coating layer of the second positive electrode active material may comprise carbon nanotubes. Because the details of carbon nanotubes are as described above, detailed descriptions thereof will be omitted.

The carbon coating layer of the second positive electrode active material may include graphene and carbon nanotubes. Accordingly, the adhesive strength and conductivity of the positive electrode active material may be further improved, and the rechargeable lithium battery including the positive electrode active material may exhibit high-capacity and high-energy-density characteristics.

When the carbon coating layer of the second positive electrode active material includes graphene and carbon nanotubes, the graphene of the carbon coating layer may be included in an amount from about 0.02 wt% to about 3.0 wt%, and the carbon nanotubes of the carbon coating layer may be included in an amount from about 0.02 wt% to about 3.0 wt%, based on a total of 100 wt% of the second positive electrode active material. The graphene of the carbon coating layer may be included in an amount from about 0.03 wt% to about 2.5 wt% and the carbon nanotubes may be included in an amount from about 0.03 wt% to about 2.5 wt%, based on a total of 100 wt% of the second positive electrode active material. The graphene may be included in an amount from about 0.05 wt% to about 2.0 wt% and the carbon nanotubes may be included in an amount from about 0.05 wt% to about 2.0 wt%, based on a total of 100 wt% of the second positive electrode active material. The graphene may be included in an amount from about 0.05 wt% to about 0.5 wt% and the carbon nanotubes may be included in an amount from about 0.05 wt% to about 0.5 wt%, based on a total of 100 wt% of the second positive electrode active material. When the amount of the graphene of carbon coating layer or the amount of the carbon nanotubes of carbon coating layer satisfy the above range, the adhesive strength and conductivity of the positive electrode active material may be maximized.

The positive electrode active material layer may include from about 20 wt% to about 95 wt%, for example, from about 30 wt% to about 90 wt%, from about 45 wt% to about 85 wt%, or from about 60 wt% to about 80 wt%, of the first positive electrode active material and may include from about 5 wt% to about 80 wt%, for example, from about 10 wt% to about 70 wt%, from about 15 wt% to about 55 wt%, or from about 20 wt% to about 40 wt%, of the second positive electrode active material, based on a total of 100 wt% of the first positive electrode active material and the second positive electrode active material. When the amounts of the first positive electrode active material and the second positive electrode active material satisfy the above ranges, the capacity and the mixture density of the positive electrode may be improved, and the energy density of the rechargeable lithium battery may be further improved.

A particle strength of the positive electrode active material including the first positive electrode active material and the second positive electrode active material may be greater than or equal to about 145 MPa, greater than or equal to about 148 MPa, greater than or equal to about 150 MPa, or greater than or equal to about 155 MPa and may be less than or equal to about 300 MPa, less than or equal to about 290 MPa, or less than or equal to about 270 MPa. When the particle strength of the positive electrode active material satisfies the above ranges, cracks occurring in the particles may be reduced and the density of the positive electrode active material layer may be improved. The particle strength of the positive electrode active material may be measured by placing the active material particles on a plate, increasing the compressive force using a particle strength meter, and measuring a force when the particles are destroyed, which is used as the particle strength value. Additionally, an average particle strength may be obtained by randomly selecting about 20 active material particles, measuring the particle strengths of the 20 active material particles, and then taking the average value of the particle strengths of the 20 active material particles.

In addition to the aforementioned positive electrode active material, the positive electrode active material layer may further include a binder, a conductive material, or a combination thereof.

The binder may serve to adhere the positive electrode active material particles well to each other and to adhere the positive electrode active material well to the current collector. The binder may include polyvinyl alcohol, carboxymethylcellulose, hydroxypropylcellulose, diacetylcellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but the binder is not limited thereto.

In the positive electrode active material layer, the binder may be included in an amount from about 0.1 wt% to about 5 wt%, based on a total of 100 wt% of the positive electrode active material layer. The binder may be included in an amount from about 0.1 wt% to about 1 wt%, for example, less than about 1.0 wt%, or less than or equal to from about 0.9 wt% based on a total of 100 wt% of the positive electrode active material layer. Because the positive electrode active material layer includes the aforementioned first positive electrode active material and second positive electrode active material, the positive electrode may exhibit excellent electronic conductivity, may exhibit low resistance, and may have high positive electrode density, even if the positive electrode active material layer does not include a separate binder or includes a very small amount of binder.

The conductive material is used to provide conductivity to the electrode, and is not particularly limited as long as the conductive material has electronic conductivity without causing chemical changes to the positive electrode and the rechargeable lithium battery including the positive electrode. The conductive material may include a carbon-based material such as natural graphite, artificial graphite, carbon black, acetylene black, Ketjen black, carbon fiber, carbon nanofiber, or a carbon nanotube; a metal-based material in the form of metal powder or metal fiber including copper, nickel, aluminum, or silver; a conductive polymer such as a polyphenylene derivative; or a mixture thereof.

In the positive electrode active material layer, the conductive material may be included in an amount from about 0.05 wt% to about 5 wt% based on a total of 100 wt% of the positive electrode active material layer. The conductive material may be included in an amount from about 0.05 wt% to about 1 wt%, for example, less than about 1.0 wt%, less than or equal to about 0.8 wt%, less than or equal to about 0.7 wt%, or less than or equal to about 0.5 wt% based on a total of 100 wt% of the positive electrode active material layer. Because the positive electrode active material layer includes the aforementioned first positive electrode active material and second positive electrode active material, the positive electrode may exhibit excellent electronic conductivity, may exhibit low resistance, and may have high positive electrode density even if the positive electrode active material layer does not include a separate conductive material or includes a very small amount of conductive material.

A density of the positive electrode active material layer is greater than or equal to about 3.7 g/cc, for example, from about 3.70 g/cc to about 5.00 g/cc, from about 3.71 g/cc to about 4.50 g/cc, or from about 3.72 g/cc to about 4.00 g/cc. When the density of the positive electrode active material layer satisfies the above ranges, the energy density of the rechargeable lithium battery may be improved. Because the positive electrode active material included in the positive electrode active material layer may have a high particle strength and a high lubrication degree of the particle surface, a compression process may be performed at a greater pressure during the manufacture of the positive electrode. In addition, because the lubrication degree of the surface of the positive electrode active material is high, the compression efficiency of the positive electrode may be increased by the sliding effect. In addition, because the compression process may be performed at a greater pressure, the pores of the electrode plates in the positive electrode active material layer may be reduced, and the density of the positive electrode active material layer may be further improved. The density of the positive electrode active material layer means the ratio of the weight to the volume of the positive electrode active material layer in the compressed positive electrode. The density of the positive electrode active material layer may be obtained by measuring a cross-sectional area, a thickness, and a weight of the positive electrode active material layer excluding the positive electrode current collector, by calculating the volume by multiplying the cross-sectional area and the thickness, and by dividing the weight by the volume.

An adhesive strength of the positive electrode active material layer to the current collector may be greater than or equal to about 3 gf/mm, and the resistivity of the positive electrode active material layer may be less than or equal to about 40 Ω·cm. The adhesive strength of the positive electrode active material layer to the current collector may be greater than or equal to about 3.1 gf/mm, greater than or equal to about 3.2 gf/mm, greater than or equal to about 3.3 gf/mm, or greater than or equal to about 3.4 gf/mm, and less than or equal to about 30 gf/mm, less than or equal to about 28 gf/mm, less than or equal to about 25 gf/mm, or less than or equal to about 23 gf/mm. Additionally, the resistivity of the positive electrode active material layer may be less than or equal to about 35 Ω·cm, less than or equal to about 30 Ω·cm, less than or equal to about 25 Ω·cm, or less than or equal to about 20 Ω·cm, and greater than or equal to about 0.5 Ω·cm, greater than or equal to about 1.0 Ω·cm, greater than or equal to about 3.0 Ω·cm, greater than or equal to about 5.0 Ω·cm, or greater than or equal to about 5.5 Ω·cm. Because the positive electrode active material layer includes the aforementioned positive electrode active material, the positive electrode active material layer can exhibit excellent electronic conductivity and implement low resistance even if it does not include a separate conductive material or includes a very small amount of conductive material and may implement high electrode plate adhesive strength even if it includes a very small amount of binder.

A thickness of the positive electrode active material layer may be from about 40 µm to about 300 µm, for example, from about 50 µm to about 200 µm or from about 80 µm to about 150 µm. When the thickness of the positive electrode active material layer satisfies the above ranges, a high-capacity and high-energy-density battery may be realized. The thickness of the positive electrode active material layer may be measured through a SEM image of the positive electrode cross-section. However, the present disclosure is not limited thereto, and the thickness of the positive electrode active material layer may be measured through TEM, TOF-SIMS, XPS, or EDS analysis.

A porosity of the positive electrode may be less than or equal to about 30%, less than or equal to about 25%, or less than or equal to about 20%, and greater than or equal to about 1%, greater than or equal to about 5%, or greater than or equal to about 7%. When the porosity of the positive electrode satisfies the above ranges, the capacity and energy density of the positive electrode may be improved. The porosity of the positive electrode means a ratio of volume of the pores present within the positive electrode to a total volume of the positive electrode and may be measured, for example, by mercury porosimetry.

### Method of Manufacturing Positive Electrode

**In** some embodiments, provided is a method of manufacturing a positive electrode for a rechargeable lithium battery which may include (i) preparing a first positive electrode active material, the first positive electrode active material including secondary particles in which a plurality of primary particles are agglomerated, including a lithium transition metal composite oxide, and a carbon coating layer on the surface of the secondary particles, the first positive electrode active material having an average particle diameter D₅₀ of about 9 µm to about 25 µm, (ii) preparing a second positive electrode active material including a lithium transition metal composite oxide, the second positive electrode active material having an average particle diameter D₅₀ of about 1 µm to about 8 µm, (iii) preparing a positive electrode active material layer composition by mixing the first positive electrode active material and the second positive electrode active material, and (iv) coating the positive electrode active material layer composition on a positive electrode current collector and drying and compressing the positive electrode active material layer composition on the positive electrode current collector to obtain a positive electrode having a density of greater than or equal to about 3.7 g/cc.

Because some details of the first positive electrode active material, the second positive electrode active material, and the positive electrode are as described above, descriptions related to those details are omitted.

### (i) Preparing of First Positive Electrode Active Material

The process (i) of the method of manufacturing the positive electrode may be, for example, dry mixing the secondary particles and the carbon material to obtain a first positive electrode active material. The carbon material is as described above. Through this process, a coating layer including graphene having a layered structure of, for example, from 2 to 50 layers may be provided on the surface of a secondary particles. Accordingly, while minimizing the manufacturing cost, even when using a small amount of binder and conductive material during the manufacture of the positive electrode, adhesive strength and conductivity with the electrode plate may be secured, and a density of the positive electrode may be maximized. In addition, as the amount of the binder used in the manufacture of the positive electrode decreases, the amount of the positive electrode active material may increase, so that a rechargeable lithium battery including the positive electrode active material may exhibit high-capacity and high-energy-density characteristics.

The process (i) above may include preparing a plate-like carbon material, and dry mixing the carbon material with secondary particles.

The carbon material may be obtained, for example, by pulverizing flake graphite (i.e., graphite having a flake geometry) having an average size D₅₀ from about 3 µm to about 25 µm. Particularly, particulate graphite having an average size D₅₀ of less than or equal to about 2.5 µm, which is a plate-like carbon material, may be prepared by pulverizing flake graphite having an average size D₅₀ from about 3 µm to about 25 µm. The average size D₅₀ of the flake graphite may be less than or equal to about 20 µm, less than or equal to about 18 µm, less than or equal to about 15 µm, less than or equal to about 12 µm, or less than or equal to about 10 µm and may be greater than or equal to about 4 µm, greater than or equal to about 5 µm, or greater than or equal to about 6 µm. The average size of the flake graphite may be measured from a scanning electron microscope image. The average size D₅₀ of the flake graphite may be measured through a particle size analyzer, and means the size of particles having a cumulative volume of 50 vol% in the particle size distribution. Also, the particle size here may mean a length of the longest axis in a plane direction perpendicular to a thickness direction in the planar geometry. For the purpose of calculating the cumulative volume and D₅₀, even if a particle has a planar shape, its size is represented as an equivalent spherical diameter. In the case of planar geometry, this diameter is determined based on the characteristic dimension (e.g., the longest axis in the plane direction) to ensure a standardized and reproducible comparison of particle size distributions.

The flake graphite may have a ratio I_{D}/I_{G} of a peak intensity I_{D} around 1350 cm⁻¹ to a peak intensity I_{G} around 1580 cm⁻¹ in a Raman spectrum of greater than or equal to about 0.01 and less than about 0.15, for example, from about 0.02 to about 0.14, from about 0.08 to about 0.14, or from about 0.1 to about 0.14.

The pulverizing of the flake graphite may be performed using a milling process. The milling process may include a method known to those skilled in the art, and, for example, may employ a device such as a ball mill, a bead mill, a jet mill, a pin mill, a roller mill, a hybrid mill, a colloid mill, or an air classifier mill (ACM).

The pulverizing of flake graphite may be performed by a ball milling method, and the ball milling may be performed using zirconia beads having a size from about 1 mm to about 25 mm and may be performed at a speed from about 200 rpm to about 5,000 rpm for at time ranging from about 30 minutes to about 4 hours. A size of the zirconia beads used for pulverizing the flake graphite may be from about 1.2 mm to about 23 mm, from about 1.3 mm to about 21 mm, or from about 1.5 mm to about 20 mm. Additionally, the pulverizing of the flake graphite may be performed under conditions from about 250 rpm to about 4,500 rpm, from about 300 rpm to about 4,000 rpm, from about 400 rpm to about 3,000 rpm, or from about 600 rpm to about 2,000 rpm. Additionally, the pulverizing of the flake graphite may be performed from about 30 minutes to about 3 hours or from about 35 minutes to about 3 hours. When the size of the beads, the stirring speed, or the stirring time each satisfy the above ranges, the particle size of the particulate graphite may be controlled to a desired level.

The dry mixing of the secondary particles and the carbon material can include a method known to those skilled in the art, for example, employing a dry mixer, a homogenizer, or a Henschel mixer. When the secondary particles and the carbon material are dry mixed, the manufacturing cost may be reduced, the particle strength and the lubrication degree of particle surface of the first positive electrode active material may be further improved, and the density of the positive electrode active material layer may be maximized. "Dry" may mean a state in which there is no intentional contact with a solvent such as a process solvent, or a state in which there is no intentional inclusion of a solvent.

In the process of dry mixing the secondary particles and the carbon material, the carbon material may be mixed in an amount from about 0.05 wt% to about 5.0 wt%, for example, from about 0.2 wt% to about 5.0 wt%, from about 0.2 wt% to about 3.0 wt%, from about 0.2 wt% to about 2.5 wt%, from about 0.2 wt% to about 2.0 wt%, from about 0.2 wt% to about 1.0 wt%, or from about 0.2 wt% to about 0.8 wt% based on 100 wt% of the total of the secondary particles and the carbon material. When the amount of the carbon material satisfies the above ranges, the particle strength and the lubrication degree of particle surface of the first positive electrode active material may be further improved, and the density of the positive electrode active material layer may be maximized. Even if the amount of the carbon material is an extremely small amount of less than about 1 wt%, it may be coated on the surface of the secondary particles well, thereby increasing the electrical conductivity of the positive electrode active material, increasing the lubrication degree, and increasing the density of the positive electrode.

The process of dry mixing the secondary particles and the carbon material can be performed by mixing the secondary particles and the carbon material and by applying a shear force. A coating layer including graphene having a layered structure exhibiting a dense crystal structure may be provided while crystalline carbon derived from the carbon material is located in a two-dimensional plane on the surface of the core structure. This process may be performed using a device for applying shear force, for example, a device having a blade inside, but the present disclosure is not limited thereto.

The process may be to mix the secondary particles and the carbon material using a Nobilta mixer, and the secondary particles and the carbon material may be mixed at a shear rate of about 1,000 s⁻¹ to about 9,000 s⁻¹ and a blade rotation speed of less than or equal to about 20 m/s.

The secondary particles and the carbon material may be mixed at a shear rate of about 1,500 s⁻¹ to about 8,800 s⁻¹, about 2,000 s⁻¹ to about 8,800 s⁻¹, or about 2,500 s⁻¹ to about 8,500 s⁻¹. When the shear rate range satisfies the above ranges, a carbon coating layer may be effectively provided on the surface of the secondary particles while preventing damage to the secondary particles.

A rotation speed of the blade within the device for applying the shear force may be less than or equal to about 18 m/s, less than or equal to about 15 m/s, or less than or equal to about 10 m/s, and greater than or equal to about 3 m/s, greater than or equal to about 4 m/s, or greater than or equal to about 5 m/s. When the rotation speed of the blade satisfies the above ranges, a coating layer may be effectively provided on the surface of the secondary particle while preventing damage to the secondary particle.

The secondary particles and the carbon material may be mixed at a speed from about 500 rpm to about 6,000 rpm, for example, at a speed from about 600 rpm to about 5,500 rpm, from about 700 rpm to about 5,000 rpm, or from about 800 rpm to about 4,000 rpm. When the mixing conditions satisfy the above ranges, a coating layer may be effectively provided on the surface of the secondary particles while preventing damage to the secondary particles.

In some embodiments, the process (i) of the method of manufacturing the positive electrode may be dry mixing the secondary particles and carbon nanotubes to obtain a first positive electrode active material. The carbon nanotubes may be as described above, and the dry mixing conditions of the secondary particles and the carbon nanotubes may be the same as the dry mixing conditions of the secondary particles and the carbon material as described above.

In some embodiments, the process (i) of the method of manufacturing the positive electrode may be dry mixing the secondary particles, the carbon material, and the carbon nanotubes to obtain a first positive electrode active material. The dry mixing conditions of the secondary particles, the carbon material, and the carbon nanotubes may be the same as the dry mixing conditions of the secondary particles and the carbon material as described above.

When the secondary particles, the carbon material, and the carbon nanotubes are dry mixed, the carbon material may be mixed in an amount from about 0.02 wt% to about 3.0 wt% and the carbon nanotubes may be mixed in an amount from about 0.02 wt% to about 3.0 wt%, based on a total of 100 wt% of the secondary particles, the carbon material, and the carbon nanotubes. The carbon material may be mixed in an amount from about 0.03 wt% to about 2.5 wt% and the carbon nanotubes may be mixed in an amount from about 0.03 wt% to about 2.5 wt%, based on a total of 100 wt% of the secondary particles, the carbon material, and the carbon nanotubes. The carbon material may be mixed in an amount from about 0.05 wt% to about 2.0 wt% and the carbon nanotubes may be mixed in an amount from about 0.05 wt% to about 2.0 wt%, based on a total of 100 wt% of the secondary particles, the carbon material, and the carbon nanotubes. The carbon material may be mixed in an amount from about 0.05 wt% to about 0.5 wt% and the carbon nanotubes may be mixed in an amount from about 0.05 wt% to about 0.5 wt%, based on a total of 100 wt% of the secondary particles, the carbon material, and the carbon nanotubes. When the amount of the carbon material or the carbon nanotubes satisfy the above range, a pellet density and a conductivity of the positive electrode active material may be improved, and the rechargeable lithium battery including the positive electrode active material may exhibit high-capacity and high-energy-density characteristics.

### (ii) Preparing of Second Positive Electrode Active Material

In the process (ii) of the method of manufacturing a positive electrode, a second positive electrode active material including a lithium transition metal composite oxide and having an average particle diameter D₅₀ of about 1 µm to about 8 µm is prepared.

The process (ii) above may further include dry mixing core particles containing a lithium transition metal composite oxide and having an average particle diameter D₅₀ of about 1 µm to about 8 µm with a carbon material to obtain a second positive electrode active material having a carbon coating layer provided on the surface of the core particles. The carbon coating layer of the second positive electrode active material may be applied in the same manner as the carbon coating layer of the first positive electrode active material described above.

### (iii) Preparing of Positive Electrode Active Material Layer Composition

The process (iii) of the method of manufacturing the positive electrode includes mixing the first positive electrode active material and the second positive electrode active material to prepare a positive electrode active material layer composition. In this process, the first positive electrode active material may be mixed in an amount from about 20 wt% to about 95 wt%, for example, from about 30 wt% to about 90 wt%, from about 45 wt% to about 85 wt%, or from about 60 wt% to about 80 wt%, and the second positive electrode active material may be mixed in an amount from about 5 wt% to about 80 wt%, for example, from about 10 wt% to about 70 wt%, from about 15 wt% to about 55 wt%, or from about 20 wt% to about 40 wt% based on a total of 100 wt% of the first positive electrode active material and the second positive electrode active material. When the amounts of the first positive electrode active material and the second positive electrode active material satisfy the above ranges, the capacity and the mixture density of the positive electrode may be improved, and the energy density of the rechargeable lithium battery may be further improved.

### (iv) Obtaining Positive Electrode

The process (iv) of the method of manufacturing the positive electrode includes coating the positive electrode active material layer composition on a positive electrode current collector, drying, and compressing to obtain a positive electrode having a density of greater than or equal to about 3.7 g/cc. The process (iv) may be performed using a method known to those skilled in the art. The description of the positive electrode current collector and the positive electrode at this stage may be explained in the same way as the description of the positive electrode described above, and, thus, detailed descriptions thereof are omitted.

### Rechargeable Lithium Battery

A rechargeable lithium battery according to some embodiments may include the aforementioned positive electrode, a negative electrode, and an electrolyte. The rechargeable lithium battery may be a lithium ion battery using a liquid electrolyte, or an all-solid-state rechargeable battery or a semi-solid rechargeable battery using a solid electrolyte.

The rechargeable lithium battery may be classified into a cylindrical, prismatic, pouch, or coin type depending on the geometry of the rechargeable lithium battery.

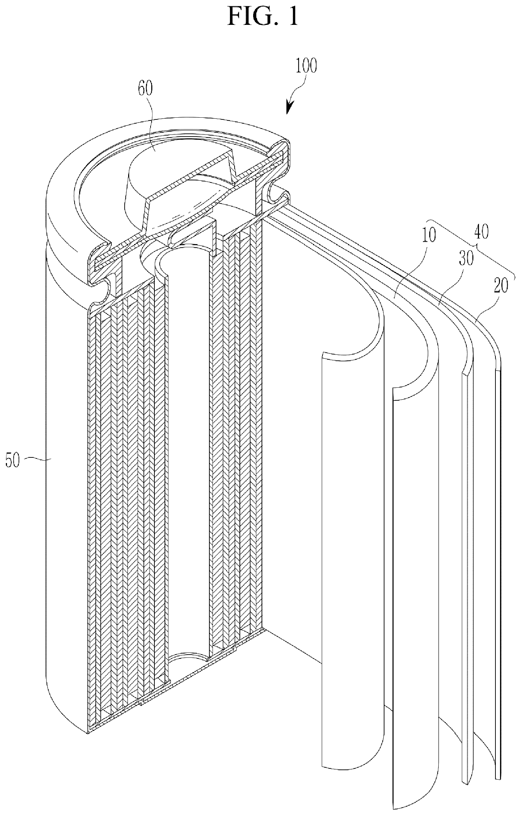

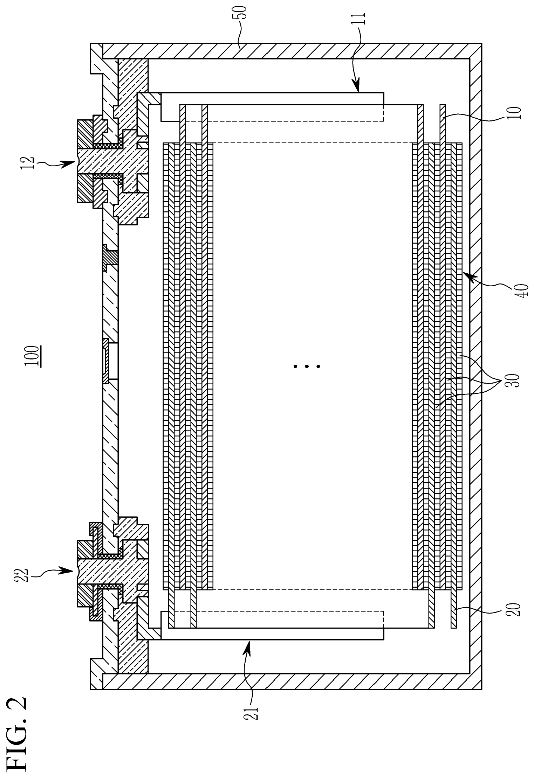

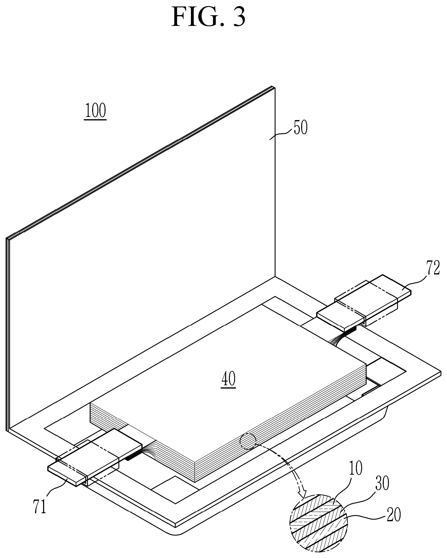

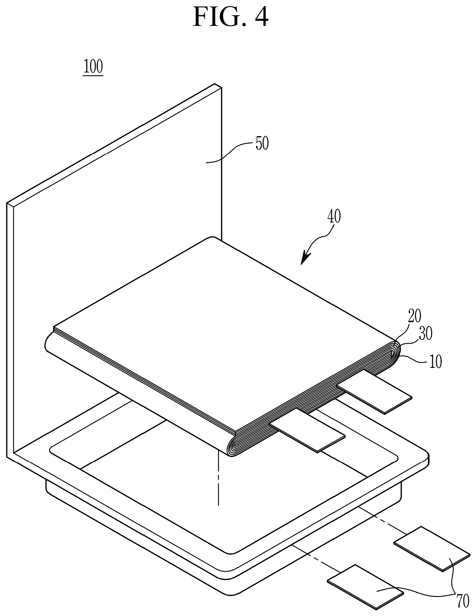

FIGS. 1 to 4 are schematic views each showing the rechargeable lithium battery according to some embodiments of the present disclosure. Particularly, FIG. 1 shows a cylindrical battery, FIG. 2 shows a prismatic battery, and FIGS. 3 and 4 each show a pouch type battery.

The rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealer 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 or, particularly, includes a positive electrode tab 71 and a negative electrode tab 72 serving as an electrical path for inducing the current provided in the electrode assembly 40 to the outside.

The rechargeable lithium battery according to some embodiments may be rechargeable at a high voltage or may be suitable for being driven at a high voltage. The charging voltage of a rechargeable lithium battery may be greater than or equal to about 4.45 V, from about 4.45 V to about 4.7 V, from about 4.45 V to about 4.6 V, or from about 4.45 V to about 4.55 V. By using the positive electrode active material according to some embodiments, the rechargeable lithium battery may significantly reduce an amount of gas generated even when charged at high voltage and may achieve high capacity and long cycle-life characteristics.

### Negative Electrode

The negative electrode may include a current collector and a negative electrode active material layer on the current collector. The negative electrode active material layer includes a negative electrode active material and may further include a binder, a conductive material, or a combination thereof.

### Negative Electrode Active Material

The negative electrode active material includes a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may include a carbon-based negative electrode active material, for example, crystalline carbon, amorphous carbon, or a combination thereof. The crystalline carbon may be irregular, sheet, flake, spherical, or fiber shaped natural graphite and/or artificial graphite. The amorphous carbon may be a soft carbon, a hard carbon, a mesophase pitch carbonization product, and/or calcined coke.

As the alloy of lithium metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping and dedoping lithium may be a Si-based negative electrode active material or a Sn-based negative electrode active material. The Si-based negative electrode active material may be silicon, a silicon-carbon composite, SiOₓ (0<x≤2), a Si-Q alloy (wherein Q is an alkali metal, an alkaline earth metal, a Group 13 element, a Group 14 element [excluding Si], a Group 15 element, a Group 16 element, a transition metal, a rare earth element, or a combination thereof, and for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof), or a combination thereof. The Sn-based negative electrode active material may be Sn, SnO₂, a Sn-based alloy, or a combination thereof.

The silicon-carbon composite may be a composite of silicon and amorphous carbon. The average particle diameter D₅₀ of the silicon-carbon composite particles may be, for example, from about 0.5 µm to about 20 µm. According to some embodiments, the silicon-carbon composite may be in the form of silicon particles and amorphous carbon coated on the surface of the silicon particles. In some embodiments, the silicon-carbon composite may include a secondary particle (core) in which silicon primary particles are assembled and an amorphous carbon coating layer (shell) on the surface of the secondary particle. The amorphous carbon may also be present between the silicon primary particles; particularly, the silicon primary particles may be coated with amorphous carbon. The secondary particles may be dispersed in an amorphous carbon matrix.

The silicon-carbon composite may further include crystalline carbon. The silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and/or calcined coke.

When the silicon-carbon composite includes silicon and amorphous carbon, an amount of the silicon may be from about 10 wt% to about 50 wt%, and an amount of the amorphous carbon may be from about 50 wt% to about 90 wt% based on 100 wt% of the silicon-carbon composite. In addition, when the silicon-carbon composite includes silicon, amorphous carbon, and crystalline carbon, an amount of silicon may be from about 10 wt% to about 50 wt%, an amount of crystalline carbon may be from about 10 wt% to about 70 wt%, and an amount of amorphous carbon may be from about 20 wt% to about 40 wt% based on 100 wt% of the silicon-carbon composite.

Additionally, a thickness of the amorphous carbon coating layer may be from about 5 nm to about 100 nm. An average particle diameter D₅₀ of the silicon particles (primary particles) may be from about 10 nm to about 1 µm or from about 10 nm to about 200 nm. The silicon particles may be present as silicon alone, in the form of a silicon alloy, or may be present in an oxidized form. The oxidized form of the silicon may be represented as SiOₓ (0<x≤2). An atomic ratio of Si:O, which indicates the degree of oxidation, may be from about 99:1 to about 33:67.

The Si-based negative electrode active material or Sn-based negative electrode active material may be mixed with the carbon-based negative electrode active material. When a Si-based negative electrode active material or a Sn-based negative electrode active material is used in combination with a carbon-based negative electrode active material, a weight ratio of the Si-based negative electrode active material or the Sn-based negative electrode active material to the carbon-based negative electrode active material may be from about 1:99 to about 90:10.

The negative electrode active material may be included in an amount from about 80 wt% to about 99 wt%, for example, from about 85 wt% to about 99 wt%, or from about 90 wt% to about 99 wt%% based on 100 wt% of the total negative electrode active material layer.

### Binder

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber and may be, for example, polytetrafluoroethylene, polyvinylidene fluoride, a polyvinylidene fluoridehexafluoropropylene copolymer, polyethylene oxide, or a combination thereof.

The binder may be included in an amount from about 0.5 wt% to about 5 wt%, for example, from about 0.5 wt% to about 4 wt% or from about 1 wt% to about 3 wt% based on 100 wt% of the total negative electrode active material layer.

### Conductive Material

The conductive material is included to provide electrode conductivity to the negative electrode, and any electrically conductive material may be used as a conductive material unless the electrically conductive material causes a chemical change. Examples of the conductive material include a carbon-based material such as natural graphite, artificial graphite, carbon black, acetylene black, Ketjen black, a carbon fiber, a carbon nanofiber, or a carbon nanotube; a metal-based material of a metal powder or a metal fiber including copper, nickel, aluminum, and/or silver; a conductive polymer such as a polyphenylene derivative; or a mixture thereof.

The conductive material may be included in an amount from about 0.5 wt% to about 5 wt%, for example, from about 0.5 wt% to about 4 wt% or from about 1 wt% to about 3 wt% based on 100 wt% of the total negative electrode active material layer.

### Current Collector

There is no particular limitation on the negative electrode current collector as long as it does not cause chemical changes in the negative electrode and the rechargeable lithium battery including the negative electrode. The negative electrode current collector can be a copper foil, a nickel foil, a stainless steel foil, a titanium foil, a nickel foam, a copper foam, a polymer substrate coated with a conductive metal, or a combination thereof.

The negative electrode current collector may have various geometries, such as a planar geometry, a thin body geometry, a film geometry, a sheet geometry, a foil geometry, a net geometry, a porous body geometry, a foam body geometry, or a non-woven body geometry. The negative electrode current collector may include microscopic irregularities on its surface, which may improve adhesive strength to the negative electrode active material.

A thickness of the negative electrode current collector may be from about 1 µm to about 20 µm, for example, from about 5 µm to about 15 µm, or from about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2,5-dimethyltetrahydrofuran, and/or tetrahydrofuran.

The ketone-based solvent may include cyclohexanone. The alcohol-based solvent may include ethanol or isopropyl alcohol, and the aprotic solvent may include nitriles such as R-CN (wherein R is a C2 to C20 linear, branched, or cyclic hydrocarbon group, and may include a double bond, an aromatic ring, or an ether group); amides such as dimethylformamide; dioxolanes such as 1,3-dioxolane or 1,4-dioxolane; and/or sulfolanes.

The non-aqueous organic solvent may be used alone or in a mixture of two or more types, and when two or more types are used in a mixture, a mixing ratio can be appropriately adjusted according to the desired battery performance, which is widely known to those working in the field.

When using a carbonate-based solvent, a cyclic carbonate and a chain carbonate may be mixed and used, and the cyclic carbonate and the chain carbonate may be mixed in a volume ratio from about 1:1 to about 1:9.

The non-aqueous organic solvent may further include an aromatic hydrocarbon-based organic solvent. A carbonate-based solvent and an aromatic hydrocarbon-based organic solvent may be mixed and used in a volume ratio from about 1:1 to about 30:1.

The electrolyte solution may further include vinylethylene carbonate, vinylene carbonate, or an ethylene carbonate-based compound to improve a battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include one or more selected from LiPF₆, LiBF₄, LiSbF₆, LiAsF₆, LiClO₄, LiAlO₂, LiAlCl₄, LiPO₂F₂, LiCl, LiI, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within a range from about 0.1 M to about 2.0 M. When the concentration of lithium salt is within the above range, the electrolyte solution has appropriate ionic conductivity and viscosity, and, thus, excellent performance can be achieved, and lithium ions can move effectively.

### Separator

Depending on the type of rechargeable lithium battery, the rechargeable lithium battery may further include a separator between the positive and negative electrodes. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, or polypropylene/polyethylene/polypropylene three-layer separator.

The separator may include a porous substrate and a coating layer including an organic material, an inorganic material, or a combination thereof on one or both surfaces of the porous substrate.

The porous substrate may be a polymer film provided of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, and TEFLON (polytetrafluoroethylene), or a copolymer or mixture of two or more thereof. The porous substrate may include glass fibers, or may comprise a composite membrane of polymer and glass fibers.

The porous substrate may have a thickness from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, Ga₂O₃, ZnO, ZrO₂, Y₂O₃, SrTiO₃, BaTiO₃, Mg(OH)₂, boehmite, and a combination thereof, but the inorganic material is not limited thereto. An average particle diameter D₅₀ of the inorganic particles may be from about 1 nm to about 2000 nm, for example, from about 100 nm to about 1000 nm or from about 100 nm to about 700 nm. The average particle diameter D₅₀ of the inorganic particles may be obtained by randomly selecting 20 particles from a scanning electron microscope image of the inorganic particles, each particle being assumed to have a spherical shape and the measured size being converted into an equivalent spherical diameter, measuring their particle diameters (diameter, long diameter, or long axis length) to obtain a particle size distribution, and then taking the size of particles having a cumulative volume of 50 vol% from the particle size distribution as the average particle diameter.

The organic material and the inorganic material may be mixed in one coating layer, or a coating layer including an organic material and a coating layer including an inorganic material may be stacked. A thickness of the coating layer may be from about 0.5 µm to about 20 µm, for example, from about 1 µm to about 10 µm or from about 1 µm to about 5 µm.

The rechargeable lithium battery according to some embodiments may be applied to automobiles, mobile phones, or various types of electrical devices, but the rechargeable lithium battery is not limited thereto.

Hereinafter, examples and comparative examples of the present invention are described. The following examples are merely illustrative of some embodiments according to the present disclosure, and the present disclosure is not limited to the following examples.

### Example 1

### (1) Preparation of Positive Electrode Active Material

Flake graphite (DJrGO-SF (Dongjin Semichem), having an average particle diameter D₅₀ of about 3 µm and a ratio I_{D}/I_{G} of peak intensity I_{D} around 1350 cm⁻¹ to peak intensity I_{G} around 1580 cm⁻¹ in a Raman spectrum of about 0.12) was mixed with ZrO₂ beads with a particle diameter of 2 mm, which was 10 times a weight of the flake graphite. Then, the flake graphite was milled with the beads for 1 hour under a condition of 1,000 rpm to prepare graphite particulates having an average particle diameter D₅₀ of 100 nm.

After preparing secondary particles having a composition of LiNi_{0.88}Co_{0.11}Mn_{0.01}O₂ and an average particle diameter D₅₀ of about 14 µm in the form of an assembly of a plurality of primary particles, 99.8 wt% of the secondary particles and 0.2 wt% of the graphite particulates were put into a dry mixer. After setting a shear rate to of 5,000 s⁻¹ and a rotation speed of a blade in the mixer to 10 m/s, the secondary particles and the graphite particulates were mixed for 10 minutes to prepare a first positive electrode active material.

After preparing a second positive electrode active material having a composition of LiNi_{0.88}Co_{0.11}Mn_{0.01}O₂ in the form of single particles with an average particle diameter D₅₀ of about 2 µm, the first positive electrode active material and the second positive electrode active material were mixed to have a weight ratio of 70:30, for preparing a positive electrode active material.

### (2) Manufacturing of Positive Electrode

98.7 wt% of the positive electrode active material prepared in step '(1) Preparation of Positive Electrode Active Material,' 0.4 wt% of carbon nanotubes (as a conductive material), and 0.9 wt% of polyvinylidene fluoride as a binder were dispersed in an N-methylpyrrolidone (NMP) solvent to prepare a positive electrode active material slurry. The positive electrode active material slurry was coated on a 12 µm-thick aluminum substate (a current collector) and dried to form a positive electrode active material layer and then compressed with a pressure of 45 MPa to manufacture a positive electrode. Based on an SEM analysis of the compressed positive electrode, the positive electrode active material layer had a thickness of about 100 µm.

### (3) Manufacturing of Rechargeable Lithium Battery Cell

The positive electrode manufactured in step '(2) Manufacturing of Positive Electrode' and a lithium metal counter electrode were used for manufacturing a rechargeable lithium battery cell, and a separator having a polyethylene polypropylene multilayer structure was interposed between the positive electrode and the lithium metal counter electrode. Subsequently, an electrolyte solution prepared by adding 1.3 M LiPF₆ lithium salt to a solvent including ethylene carbonate, propylene carbonate, and propyl propionate mixed in a volume ratio of 10:15:75 was injected into an assembly of the positive electrode, the separator, and the lithium metal counter electrode to manufacture a rechargeable lithium battery cell via a conventional method.

### Example 2

A positive electrode active material, a positive electrode, and a rechargeable lithium battery cell were manufactured substantially in the same manner as in Example 1 except that the graphite particulates were prepared by milling the flake graphite for 20 minutes to have an average particle diameter D₅₀ of 0.3 µm in '(1) Preparation of Positive Electrode Active Material' of Example 1.

### Example 3

A positive electrode active material, a positive electrode, and a rechargeable lithium battery cell were manufactured substantially in the same manner as in Example 1 except that the graphite particulates were prepared by milling the flake graphite for 10 minutes to have an average particle diameter D₅₀ of 0.5 µm in '(1) Preparation of Positive Electrode Active Material' of Example 1.

### Example 4

A positive electrode active material, a positive electrode, and a rechargeable lithium battery cell were manufactured substantially in the same manner as in Example 1 except that 99.0 wt% of the secondary particles and 1.0 wt% of the graphite particulates were mixed to prepare the first positive electrode active material in '(1) Preparation of Positive Electrode Active Material' of Example 1.

### Example 5

A positive electrode active material, a positive electrode, and a rechargeable lithium battery cell were manufactured substantially in the same manner as in Example 1 except that 98.0 wt% of the secondary particles and 2.0 wt% of the graphite particulates were mixed to prepare the first positive electrode active material in '(1) Preparation of Positive Electrode Active Material' of Example 1.

### Comparative Example 1

A positive electrode active material was prepared substantially in the same manner as in Example 1 except that the secondary particles used in preparing the first positive electrode active material was used as the first positive electrode active material in '(1) Preparation of Positive Electrode Active Material' of Example 1.

In addition, a positive electrode and a rechargeable lithium battery cell were manufactured substantially in the same manner as in Example 1 except that the positive electrode active material of Comparative Example 1 was used and was compressed via a pressure of 40 MPa during the step '(2) Manufacture of Positive Electrode' of Example 1.

### Comparative Example 2

A positive electrode active material was prepared substantially in the same manner as in Example 1 except that 99.9 wt% of the secondary particles and 0.1 wt% of the graphite particulates were mixed to prepare the first positive electrode active material in '(1) Preparation of Positive Electrode Active Material' of Example 1.

In addition, a positive electrode and a rechargeable lithium battery cell were manufactured substantially in the same manner as in Example 1 except that the positive electrode active material of Comparative Example 2 was used and compressed with a pressure of 40 MPa in '(2) Manufacture of Positive Electrode' of Example 1.

### Comparative Example 3

A positive electrode active material, a positive electrode, and a rechargeable lithium battery cell were manufactured substantially in the same manner as in Example 1 except that carbon black (product name: Super P; manufacturer: TIMCAL) instead of the graphite particulates was mixed with the secondary particles to prepare the first positive electrode active material in '(1) Preparation of Positive Electrode Active Material' of Example 1.

### Comparative Example 4

A positive electrode active material, a positive electrode, and a rechargeable lithium battery cell were manufactured substantially in the same manner as in Example 1 except that carbon nanotubes (product name: Flotube 6807; manufacturer: Cnano) instead of the graphite particulates was mixed with the secondary particles to prepare the first positive electrode active material in '(1) Preparation of Positive Electrode Active Material' of Example 1.

### Evaluation Example 1: Scanning Electron Microscope Image Analysis

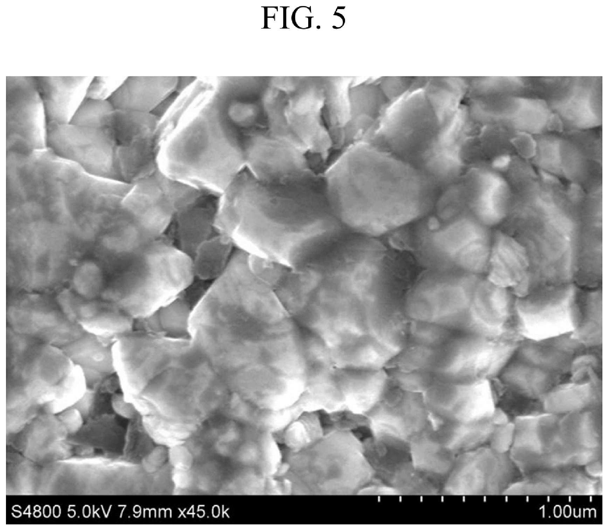

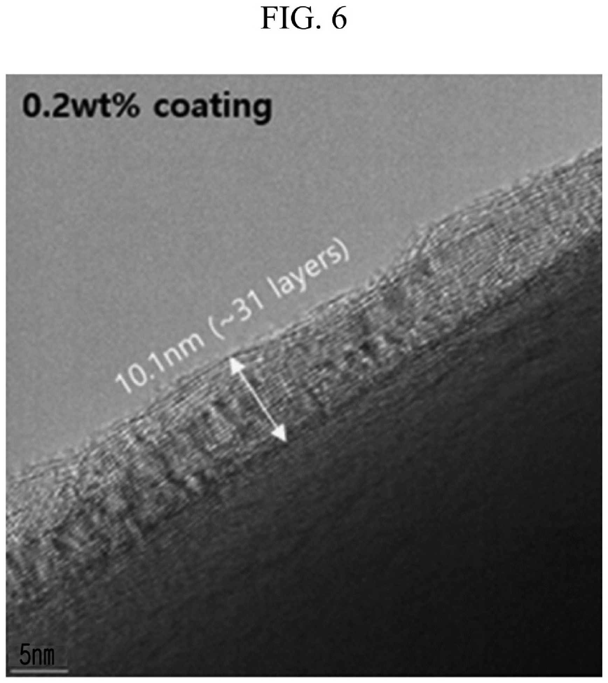

A scanning electron microscope image of the surface of the first positive electrode active material of Example 1 is shown in FIG. 5. A transmission electron microscope image of the cross-section of the first positive electrode active material of Example 1 is shown in FIG. 6.

The first positive electrode active material of Example 1 had a carbon coating layer with a layered structure on the surface of the particles of the first positive electrode active material. In addition, the carbon coating layer was provided to have a very thin and uniform thickness and to continuously wrap around the surface of the secondary particles.

Further, cross-section of the first positive electrode active material of Example 1 was prepared using a focused ion beam (FIB) and observed via transmission electron microscopy (TEM). The result confirmed that coating layers comprising graphene having a layered structure of 31 layers was formed on the first positive electrode active materials. In addition, the thickness of the coating layers was about 10.1 nm.

### Evaluation Example 2: Analysis of Physical Properties of Positive Electrode Active Material

The positive electrode active materials of the examples and the comparative examples were analyzed with respect to particle strength and carbon concentration of the surface of the particles, and the results are shown in Table 1. A specific evaluation method of the results is as follows.

### (1) Particle strength

After placing the active material particles on a plate, a compression force was increased by using a micro compression testing machine (product name: MCT-W500; manufacturer: Shimadzu Corp.). A force at which a particle was broken was measured, and the particle strength of the active material particles was obtained by measuring particle strengths of total 20 particles and averaging those particle strengths.

### (2) Carbon Concentration on the Surface

The active material particles were measured with respect to a carbon amount by using X-ray photoelectron spectroscopy (XPS). The XPS analysis was performed under the following conditions.
- X-ray type: Al k alpha, 1486.68 eV, 900 µm Beam size;
- Analyzer: CAE (constant analyzer energy) Mode;
- Number of scans: 50;
- Pass energy: 20 eV;
- Dwell Time: 100 ms;
- Ion gun: Ar ion;
- Ion energy: 4000 eV;
- Etch Cycle: 300 s;
- Total Levels: 20; and
- Calibration reference: in all XPS spectra, binding energy was calibrated based on 1s binding energy of carbon, 284.8 eV.

### Evaluation Example 3: Analysis of Physical Properties of Positive Electrode

The positive electrodes of the examples and the comparative examples were analyzed with respect to density of the positive electrode active material layers, and the results are shown in Table 1. A specific evaluation method of the results is as follows.

The positive electrode active material layers excluding a positive electrode current collector were measured with respect to a cross-sectional area, a thickness, and a weight of the positive electrode active material layers . Subsequently, the cross-sectional area was multiplied with the thickness to calculate a volume, and the weight was divided by the volume to calculate a density of each positive electrode active material layer.

### Evaluation Example 4: Performance Analysis of Rechargeable Lithium Battery Cell

The rechargeable lithium battery cells according to the examples and the comparative examples were analyzed with respect to initial discharge capacity and a capacity retention rate (cycle-life characteristics), and the results are shown in Table 1. A specific evaluation method of the results is as follows.

### (1) Initial Discharge Capacity

The rechargeable lithium battery cells were charged under conditions of constant current (0.2 C) and constant voltage (4.25 V; 0.05 C cut-off), were paused for 10 minutes, and were discharged to 3.0 V under the condition of constant current (0.2 C) at 25°C for initial charge and discharge. Herein, initial discharge capacity of the cells was measured.

### (2) Capacity Retention Rate

After the initial charge and discharge, the cells were 50 times repeatedly charged and discharged under conditions of 0.5 C/0.5 C at 25°C to measure discharge capacity at the 50^{th} cycle. A ratio of the discharge capacity at the 50^{th} cycle to the discharge capacity at the 1^{st} cycle was calculated and then shown as a capacity retention rate (i.e., cycle-life characteristics).

**Table 1:**

| | First positive electrode active material | | | Positive electrode active material | | Positive electrode | Rechargeable lithium battery cell | |
|---|---|---|---|---|---|---|---|---|
| | Amount of secondary particle (wt%) | Amount of carbon material (wt%) | Type of carbon material | Particle strength (MPa) | Carbon concentration of surface (wt%) | Density of positive electrode active material layer (g/cc) | Initial discharge capacity (mAh/g) | Capacity retention rate (%) |
| Example 1 | 99.8 | 0.2 | particulate graphite (100 nm) | 179 | 0.4 | 3.75 | 210 | 96 |
| Example 2 | 99.8 | 0.2 | particulate graphite (0.3 µm) | 165 | 0.35 | 3.72 | 209 | 96 |
| Example 3 | 99.8 | 0.2 | particulate graphite (0.5 µm) | 173 | 0.38 | 3.73 | 209 | 97 |
| Example 4 | 99.0 | 1.0 | particulate graphite (100 nm) | 182 | 0.8 | 3.79 | 208 | 97 |
| Example 5 | 98.0 | 2.0 | particulate graphite (100 nm) | 190 | 1.2 | 3.80 | 208 | 96 |
| Comparative Example 1 | 100.0 | - | - | 140 | 0 | 3.60 | 206 | 92 |
| Comparative Example 2 | 99.9 | 0.1 | particulate graphite (100 nm) | 139 | 0.1 | 3.60 | 206 | 92 |
| Comparative Example 3 | 99.8 | 0.2 | carbon black | 130 | 0.0 | 3.58 | 205 | 91 |
| Comparative Example 4 | 99.8 | 0.2 | CNT | 130 | 0.1 | 3.59 | 205 | 91 |

Referring to Table 1, Examples 1 to 5 exhibited particle strength within a range from 165 MPa to 190 MPa and carbon concentration on the surface within a range from 0.35 wt% to 1.2 wt%. In other words, in Examples 1 to 5, a carbon coating layer having a layered structure was provided on the surface of particles and had high particle strength.

In addition, Examples 1 to 5 showed that the positive electrode active material layers had density from 3.72 g/cc to 3.80 g/cc. In other words, in Examples 1 to 5, because the positive electrode active materials had a high particle strength and a high lubrication of the particle surface, the compression process was performed with a greater pressure, and, accordingly, it was confirmed that mixture density of the electrode plates increased.

Furthermore, Examples 1 to 5 exhibited initial discharge capacity of 208 mAh/g to 210 mAh/g and a capacity retention rate from 96% to 97%. In other words, Examples 1 to 5, whose rechargeable lithium battery cells included a positive electrode containing a positive electrode active material layer with high density, showed that capacity and cycle-life characteristics of the rechargeable lithium battery were improved.

Meanwhile, Comparative Example 1, in which a carbon coating layer was not provided on the surface of the secondary particles, showed that particle strength was less than that of Examples 1 to 5 and, accordingly, that a density of the positive electrode active material layer, a capacity of the rechargeable lithium battery cell, and cycle-life characteristics of the rechargeable lithium battery cell were also less than those of Examples 1 to 5.

In addition, Comparative Example 2, which had a lesser amount of a carbon coating layer than Example 1, was confirmed to exhibit less particle strength for an active material, have less density for a positive electrode active material layer, and provide less capacity and cycle-life characteristics for a rechargeable lithium battery cell compared to Example 1.

Furthermore, Comparative Examples 3 and 4, whose carbon coating layers were respectively derived from carbon black and carbon nanotubes, showed a decreased particle strength compared to Example 1 and, accordingly, that a density of a positive electrode active material layer and capacity and cycle-life characteristics of a rechargeable lithium battery cell were also less than that of Example 1.

While the present disclosure has described some embodiments, it is to be understood that the invention is not limited to the above-described embodiments. Rather, the present disclosure is intended to cover various modifications and equivalent arrangements of the above-described embodiments.

**<Description of Symbols>**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealer | 70: | electrode tab |
| 71: | positive electrode tab | 72: | negative electrode tab |

## Claims

1. A positive electrode for a rechargeable lithium battery comprising:
a positive electrode current collector; and
a positive electrode active material layer on the positive electrode current collector, the positive electrode active material layer comprising a positive electrode active material comprising:
a first positive electrode active material having an average particle diameter D₅₀ from 9 µm to 25 µm, the first positive electrode active material comprising:
secondary particles in which a plurality of primary particles are agglomerated, comprising a lithium transition metal composite oxide; and
a carbon coating layer on a surface of the secondary particles; and
a second positive electrode active material having an average particle diameter D₅₀ from 1 µm to 8 µm, the second positive electrode active material comprising the lithium transition metal composite oxide,
wherein a density of the positive electrode active material layer is greater than or equal to 3.7 g/cc.

2. The positive electrode as claimed in claim 1, wherein
(a) the density of the positive electrode active material layer is from 3.72 g/cc to 4.00 g/cc and/or
(b) the positive electrode active material layer comprises from 20 wt% to 95 wt% of the first positive electrode active material and from 5 wt% to 80 wt% of the second positive electrode active material based on a total of 100 wt% of the first positive electrode active material and the second positive electrode active material.

3. The positive electrode as claimed in claim 1 or claim 2, wherein the carbon coating layer of the first positive electrode active material comprises graphene having a layered structure from 2 to 50 layers.

4. The positive electrode as claimed in claim 3, wherein, in the carbon coating layer of the first positive electrode active material, the graphene is derived from a plate-like carbon material,
wherein, in preferred embodiments,
(a) the plate-like carbon material comprises graphene, graphite, or a combination thereof, and/or
(b) an average size D₅₀ of the carbon material is less than or equal to 2.5 µm, preferably from 50 nm to 900 nm,
and/or
(c) a thickness of the carbon material is from 5 nm to 100 nm.

5. The positive electrode as claimed in any one of claims 1 to 4, wherein the carbon coating layer is in a form of a continuous film or in a form of an island.

6. The positive electrode as claimed in any one of claims 1 to 5, wherein the positive electrode active material layer comprises the carbon coating layer in an amount from 0.2 wt% to 5.0 wt% based on 100 wt% of the first positive electrode active material.

7. The positive electrode as claimed in any one of claims 1 to 6, wherein a thickness of the carbon coating layer is from 3 nm to 500 nm.

8. The positive electrode as claimed in any one of claims 1 to 7, wherein an average particle diameter D₅₀ of primary particles constituting the secondary particles in the first positive electrode active material is from 10 nm to 1 µm.

9. The positive electrode as claimed any one of claims 1 to 8, wherein the lithium transition metal composite oxide of the first positive electrode active material and the lithium transition metal composite oxide of the second positive electrode active material are the same or are different and are each independently a lithium nickel-based composite oxide represented by:
Liₐ₁Niₓ₁M¹_{y1}M²_{z1}O_{2-b1}X_{b1},
wherein, 0.9<al<1.2, 0.3≤x1<1, 0<y1≤0.7, 0<zl<0.7, 0.9≤x1+y1+z1≤1.1, and 0<bl<0.1,
wherein M¹ and M² are each independently one or more elements of Al, B, Ba, Ca, Ce, Co, Cr, Cu, Fe, Mg, Mn, Mo, Nb, Si, Sn, Sr, Ti, V, Y, W, and Zr, and
wherein X is one or more elements of F, P, and S.

10. The positive electrode as claimed in any one of claims 1 to 9, wherein the second positive electrode active material comprises secondary particles in which a plurality of primary particles are agglomerated, single particles, or a combination thereof.

11. The positive electrode as claimed in any one of claims 1 to 10, wherein the second positive electrode active material comprises particles comprising the lithium transition metal composite oxide and a carbon coating layer on a surface of the particles of the second positive electrode active material.

12. The positive electrode as claimed in claim 11, wherein the carbon coating layer of the second positive electrode active material comprises graphene having a layered structure from 2 to 50 layers.

13. The positive electrode as claimed in claim 12, wherein, in the carbon coating layer of the second positive electrode active material, the graphene is derived from a plate-like carbon material.

14. The positive electrode as claimed in claim 11, wherein the carbon coating layer of the first positive electrode active material or the carbon coating layer of the second positive electrode active material comprises graphene having a layered structure from 2 to 50 layers and a carbon nanotube.

15. A rechargeable lithium battery comprising:
the positive electrode as claimed in any one of claims 1 to 14;
a negative electrode; and
an electrolyte.
